# EUROPÄISCHE PATENTSCHRIFT

(11) **EP 2 868 877 B1**
(45) Veröffentlichungstag und Bekanntmachung des Hinweises auf die Patenterteilung: **14.10.2020**
(21) Anmeldenummer: 14001674.2
(22) Anmeldetag: 13.05.2014
(51) Int. Cl.: F01M 11/00

(54) **Ölwanne und Achsträger mit einer schrägen Flanschfläche**
Oil pan and axle support with an inclined flange surface
Auget à huile et support d'axe ayant une face de bride oblique

(30) Priorität: 05.11.2013 DE 102013018449
(43) Veröffentlichungstag der Anmeldung: 06.05.2015
(73) Patentinhaber: MAN Truck & Bus SE, 80995 München (DE)
(72) Erfinder: Fedo, Serhij, 90419 Nürnberg (DE)
(74) Vertreter: v. Bezold & Partner Patentanwälte - PartG mbB

(56) Entgegenhaltungen:
- EP-A1- 1 070 834
- DE-A1- 4 206 068
- DE-A1-102004 017 003
- DE-A1-102010 028 628
- GB-A- 1 422 703
- US-A1- 2010 181 146

## Beschreibung

Die Erfindung betrifft eine Ölwanne für einen Verbrennungsmotor, insbesondere für einen Dieselmotor eines Schleppers. Weiterhin betrifft die Erfindung einen entsprechend angepassten Achsträger zur mechanischen Verbindung mit der Ölwanne.

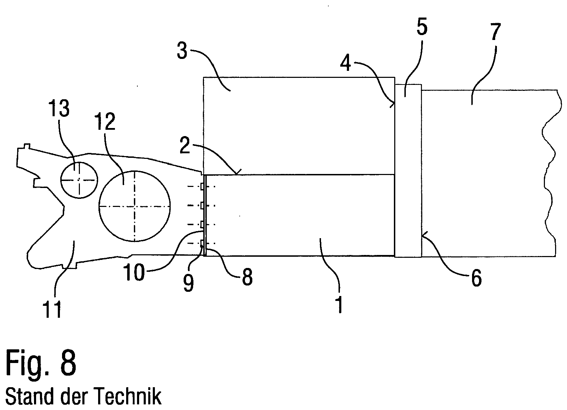

Herkömmliche Schlepper weisen oftmals eine tragende Ölwanne 1 auf, wie sie in Figur 8 gezeigt ist. An ihrer Oberseite ist die Ölwanne 1 über eine Flanschfläche 2 mit einem Verbrennungsmotor 3 verbunden, wobei es sich in der Regel um einen Dieselmotor handelt. Der Verbrennungsmotor 3 ist wiederum über eine Flanschfläche 4 mit einem Schwungradgehäuse 5 verbunden. Das Schwungradgehäuse 5 ist dann über eine weitere Flanschfläche 6 mit einem Getriebe 7 verbunden. An ihrer Vorderseite weist die Ölwanne 1 eine weitere Flanschfläche 8 auf, die über Schrauben 9 mit einer entsprechend angepassten Flanschfläche 10 eines Vorderachsträgers 11 verbunden ist. Der Vorderachsträger 11 enthält zum einen eine Aufnahme 12 für eine Vorderachse und zum anderen eine Aufnahme 13 für einen Lenkzylinder, wobei die Aufnahme 13 für den Lenkzylinder in Fahrtrichtung vor der Aufnahme 12 für die Vorderachse angeordnet ist. Diese bekannte Konstruktion für die tragende Ölwanne 1 weist verschiedene Nachteile auf, die im Folgenden kurz erläutert werden.

Zum einen sind die senkrecht ausgerichteten Flanschflächen 8, 10 der Ölwanne 1 bzw. des Vorderachsträgers 11 relativ klein, so dass die Flanschflächen 8, 10 nur relativ kleine oder zu wenige Schrauben 9 aufnehmen können.

Zum anderen stehen die Flanschflächen 8, 10 von der Ölwanne 1 bzw. von dem Vorderachsträger 11 seitlich ab, was zu einer seitlichen Einschnürung führt, wodurch die mechanische Belastbarkeit der Flanschverbindung weiter herabgesetzt wird.

Ein weiterer Nachteil dieser bekannten Konstruktion besteht darin, dass die Aufnahme 13 für den Lenkzylinder vor der Vorderachse angeordnet ist. Dies hat zur Folge, dass der Lenkzylinder im Betrieb einem abrasiven Verschleiß ausgesetzt ist, beispielsweise durch auftreffende Pflanzenstoppel von Sonnenblumen. Bei dieser bekannten Konstruktion kann die Aufnahme 13 für den Lenkzylinder jedoch nicht geschützt hinter der Aufnahme 12 für die Vorderachse angeordnet werden, da dort kein Platz ist.

Aus GB 1 422 703 A ist ein Kurbelgehäuse bekannt, bei dem an der Unterseite des Kurbelgehäuses eine Ölwanne festgeschraubt ist. Zwischen Kurbelgehäuse und Ölwanne verlaufen hierbei aufeinander liegende Flanschflächen von Kurbelgehäuse bzw. Ölwanne, wobei diese Flanschflächen schräg geneigt sind. Allerdings ist die Ölwanne hierbei nicht mechanisch tragend und auch nicht an einem Achsträger befestigt. Diese bekannte Konstruktion ist also fernliegend.

Eine ähnliche Ölwanne ist auch aus DE 42 06 068 A1 bekannt. Auch hierbei erfüllt die Ölwanne jedoch keine tragende Funktion zwischen einem Achsträger und einem Kurbelgehäuse eines Verbrennungsmotors. Zum allgemeinen technischen Hintergrund der Erfindung ist auch hinzuweisen auf DE 10 2004 017 003 A1, EP 1 070 834 A1 und US 2010/181146 A1

Die DE102010028628A1 beschreibt eine Ölwannen- und Achsträgeranordnung für ein Fahrzeug, gemäss dem Oberbegriff des Anspruchs 1.

Der Erfindung liegt deshalb die Aufgabe zugrunde, eine entsprechend verbesserte Konstruktion für Ölwanne bzw. Achsträger zu schaffen.

Diese Aufgabe wird durch eine erfindungsgemäße Ölwanne bzw. einen erfindungsgemäßen Achsträger gemäß den unabhängigen Ansprüchen gelöst.

Die Erfindung umfasst die allgemeine technische Lehre, die Flanschflächen von Ölwanne bzw. Achsträger nicht - wie bei der eingangs beschriebenen herkömmlichen Konstruktionsenkrecht anzuordnen, sondern schräg geneigt, wobei sich die Flanschfläche der Ölwanne vorzugsweise an der Unterseite der Ölwanne befindet, während sich die entsprechende Flanschfläche des Achsträgers vorzugsweise an der Oberseite des Achsträgers befindet und ebenfalls schräg geneigt ist.

Die schräge Neigung der Flanschflächen von Ölwanne bzw. Achsträger ermöglicht vorteilhaft eine wesentlich größere Flächenausdehnung der Flanschfläche, so dass die Verschraubung zwischen der Ölwanne und dem Achsträger mit größeren und/oder mehr Schrauben möglich ist, da die größeren Flanschflächen hierfür ausreichend Platz bieten.

Darüber hinaus kann es die schräge Anordnung der Flanschflächen ermöglichen, dass der Lenkzylinder in Fahrtrichtung hinter der Vorderachse angeordnet wird, wodurch der Lenkzylinder im Betrieb geschützt ist, was zu einem wesentlich geringeren Verschleiß an dem Lenkzylinder führt.

Ein weiterer Vorteil der schrägen Neigung der Flanschflächen von Ölwanne und Achsträger besteht darin, dass die Vorderachse näher an die Hinterachse herangerückt werden kann, wodurch der Radstand verringert wird, was wiederum zu einer verbesserten Wendigkeit des Schleppers führt.

Bei der erfindungsgemäßen Ölwanne ist die Flanschfläche zur Befestigung an dem Achsträger mindestens teilweise an der Unterseite der Ölwanne angeordnet und mindestens teilweise schräg zur Fahrzeuglängsrichtung geneigt, d.h. zur Horizontalen.

Die erfindungsgemäße Ölwanne kann sowohl in einem Fahrzeug zu verbauenden Motor, als auch bei einem Stationärmotor verwendet werden. Vorzugsweise wird die Ölwanne in einem Nutzfahrzeug und/oder Traktor oder Schlepper verwendet.

In einer erfindungsgemäßen Variante ist die Ölwanne im Längsschnitt entlang der Fahrzeuglängsrichtung im Wesentlichen dreieckig, wobei eine Dreiecksseite die schräg geneigte Flanschfläche bildet, während eine andere Dreiecksseite vorzugsweise horizontal ausgerichtet ist und eine mechanische Verbindung mit dem Verbrennungsmotor bzw. dem Kurbelgehäuse des Verbrennungsmotors ermöglicht.

In einer anderen erfindungsgemäßen Variante ist die Ölwanne dagegen im Längsschnitt entlang der Fahrzeuglängsrichtung im Wesentlichen trapezförmig.

Eine weitere Erfindungsvariante sieht dagegen vor, dass die Ölwanne im Längsschnitt entlang der Fahrzeuglängsrichtung einen im Wesentlichen dreieckigen Abschnitt und einen im Wesentlichen rechteckigen Abschnitt aufweist, wobei die beiden Abschnitte der Ölwanne in der Fahrzeuglängsrichtung hintereinander angeordnet sind. Vorzugsweise befindet sich der dreieckige Abschnitt der Ölwanne in Fahrzeugrichtung vor dem rechteckigen Abschnitt der Ölwanne, wobei die Flanschfläche der Ölwanne zur Verbindung mit dem Achsträger an der Unterseite des dreieckigen Abschnitts angeordnet ist.

In einem bevorzugten Ausführungsbeispiel der Erfindung weist die Flanschfläche der Ölwanne zwei Befestigungsbereiche auf, die bezüglich der Fahrzeuglängsrichtung nebeneinander liegen und zueinander beabstandet sind. Die mechanische Verbindung mit dem Achsträger erfolgt hierbei vorzugsweise nur innerhalb der beiden seitlich nebeneinander liegenden Befestigungsbereichen, wobei die Ölwanne zwischen den beiden Befestigungsbereichen der Flanschfläche der Ölwanne nach unten ragt, insbesondere in Form einer bauchigen Auswölbung der Ölwanne in der Fahrzeugmitte.

Es wurde bereits vorstehend erwähnt, dass die Flanschfläche der Ölwanne zu der Fahrzeuglängsrichtung geneigt ist, d.h. zur Horizontalen. Der Neigungswinkel der Flanschfläche der Ölwanne relativ zur Horizontalen bzw. zur Fahrzeuglängsrichtung liegt vorzugsweise im Bereich 5°-80°, 10°-60°, 15°-50° oder 20°-25°, um nur einige Beispiele für mögliche Neigungswinkel zu nennen.

Weiterhin ist der Vollständigkeit halber zu erwähnen, dass die Flanschfläche der Ölwanne vorzugsweise gegenüber der Fahrzeuglängsrichtung nach hinten geneigt ist.

Zur Erreichung einer möglichst großen Flanschfläche der Ölwanne erstreckt sich die Flanschfläche der Ölwanne vorzugsweise in der Fahrzeuglängsrichtung im Wesentlichen über die gesamte Länge der Ölwanne.

Weiterhin ist zu erwähnen, dass sich die Flanschfläche der Ölwanne vorzugsweise von der Oberseite der Ölwanne bis zur Unterseite der Ölwanne erstreckt.

In einem bevorzugten Ausführungsbeispiel der Erfindung weist die Flanschfläche der Ölwanne eine Stufe in Fahrzeuglängsrichtung auf, wobei die Stufe bezüglich der Fahrzeuglängsrichtung mittig in der Flanschfläche angeordnet sein kann. Diese Stufe in der Flanschfläche der Ölwanne bildet allein oder in Verbindung mit einer entsprechenden Stufe in der Flanschfläche des Achsträgers einen Freiraum zwischen der Ölwanne und dem Achsträger, wobei dieser Freiraum beispielsweise einen Flüssigkeitsbehälter, einen Auffahrkeil, einen Ballastkörper oder ein Elektronikbauteil aufnehmen kann.

Die Erfindung beansprucht jedoch nicht nur Schutz für die vorstehend beschriebene erfinderisch ausgebildete Ölwanne. Vielmehr beansprucht die Erfindung auch Schutz für einen entsprechend angepassten Achsträger, der eine schräg geneigte Flanschfläche zur Verbindung mit der Ölwanne aufweist.

In einem bevorzugten Ausführungsbeispiel der Erfindung weist die Flanschfläche des Achsträgers zwei seitlich nebeneinander liegende Befestigungsbereiche auf, wozu der Achsträger in der Aufsicht beispielsweise U-förmig, V-förmig oder ringförmig ausgebildet sein kann. Zwischen den beiden Befestigungsbereichen der Flanschfläche des Achsträgers liegt dann ein Freiraum, in den die Ölwanne nach unten hineinragen kann, insbesondere in Form der bereits vorstehend erwähnten bauchigen Auswölbung an der Unterseite der Ölwanne in der Fahrzeugmitte.

Ferner ist zu erwähnen, dass der Neigungswinkel der Flanschfläche des Achsträgers vorzugsweise an den Neigungswinkel der Flanschfläche der Ölwanne angepasst ist. Der Neigungswinkel der Flanschfläche des Achsträgers liegt also vorzugsweise im Bereich von 5°-80°, 10°-60°, 15°-50° oder 20°-25°, um nur einige Beispiele zu nennen.

Weiterhin ist auch zu erwähnen, dass die Flanschfläche des Achsträgers vorzugsweise gegenüber der Fahrzeuglängsrichtung nach hinten geneigt ist.

Darüber hinaus ist zu bemerken, dass die Flanschfläche des Achsträgers vorzugsweise wesentlich größer als die Querschnittsfläche des Achsträgers rechtwinklig zur Fahrzeuglängsrichtung an der Vorderseite der Ölwanne ist, wo sich normalerweise die Flanschfläche des Achsträgers befindet. In einem bevorzugten Ausführungsbeispiel der Erfindung wird die Größe der Flanschfläche auf diese Weise um das Zweifache oder mehr vergrößert.

Es wurde bereits vorstehend erwähnt, dass die Flanschfläche der Ölwanne eine Stufe aufweisen kann, um einen Freiraum zwischen der Ölwanne und dem Achsträger zu bilden. Vorzugsweise weist auch die Flanschfläche des Achsträgers eine entsprechende Stufe auf, wobei die beiden Stufen in der Flanschfläche des Achsträgers einerseits und in der Flanschfläche der Ölwanne andererseits an derselben Stelle angeordnet sind, um zusammen den Freiraum zu bilden.

Der erfindungsgemäß ausgebildete Achsträger weist vorzugsweise ebenfalls eine Aufnahme für einen Lenkzylinder auf, der zum mechanischen Antrieb einer Fahrzeuglenkung dient. Darüber hinaus enthält der erfindungsgemäße Achsträger vorzugsweise auch eine Aufnahme für eine Vorderachse, was an sich aus dem Stand der Technik bekannt ist und deshalb nicht näher beschrieben werden muss.

In einer Erfindungsvariante ist die Aufnahme für den Lenkzylinder jedoch in der Fahrzeuglängsrichtung hinter der Aufnahme für die Vorderachse angeordnet. Diese Anordnung der Aufnahme für den Lenkzylinder hinter der Vorderachse ist vorteilhaft, weil der Lenkzylinder dann einem geringeren Verschleiß ausgesetzt ist. Vorzugsweise ist die Aufnahme für den Lenkzylinder also bezüglich der Fahrzeuglängsrichtung mindestens teilweise zwischen der Aufnahme für die Vorderachse und der Ölwanne angeordnet.

Hierbei besteht auch die Möglichkeit, dass der Lenkzylinder im montierten Zustand mindestens teilweise unter der Ölwanne angeordnet ist. Dies wird durch die Schrägneigung der Flanschfläche der Ölwanne ermöglicht. Alternativ besteht die Möglichkeit, dass der Lenkzylinder mindestens teilweise in einem Freiraum der Ölwanne verläuft.

Es wurde bereits vorstehend kurz erwähnt, dass die erfindungsgemäße Konstruktion eine Verringerung des Radstands und damit eine Verbesserung der Wendigkeit des Fahrzeugs (z.B. Schlepper) ermöglicht, indem die Vorderachse nach hinten näher an den Verbrennungsmotor herangerückt wird. Beispielsweise kann die in dem Achsträger angeordnete Aufnahme für die Vorderachse zumindest teilweise bis unterhalb der Flanschfläche des Achsträgers reichen, um den Radstand zu verkürzen. Vorzugsweise ist der Abstand zwischen der Vorderachse und dem vorderen Ende der Flanschfläche des Achsträgers relativ klein und zwar vorzugsweise kleiner als 80cm, 50cm, 40cm, 30cm oder sogar 20cm. Auf diese Weise lässt sich beispielsweise erreichen, dass der Abstand zwischen der Vorderachse und dem vorderen Ende der Flanschfläche des Achsträgers kleiner ist als 80%, 50%, 30% oder sogar kleiner als 20% der Länge der Flanschfläche des Achsträgers in der Fahrzeuglängsrichtung.

Der im Rahmen der Erfindung verwendete Begriff einer schrägen Neigung der Flanschfläche der Ölwanne bzw. des Achsträgers kann verschiedene Bedeutungen haben.

Beispielsweise kann die Flanschfläche der Ölwanne bzw. des Achsträgers mindestens teilweise nicht rechtwinklig zur Fahrzeuglängsrichtung ausgerichtet sein, insbesondere mit einer schrägen Neigung zur Fahrzeuglängsrichtung.

Weiterhin kann die Flanschfläche der Ölwanne bzw. des Achsträgers mindestens teilweise nicht parallel sein zu einer Flanschfläche zwischen einem Schwungradgehäuse und einem Getriebe, insbesondere mit einem stumpfen Winkel zwischen der Flanschfläche der Ölwanne bzw. des Achsträgers einerseits und der Flanschfläche zwischen dem Schwungradgehäuse und dem Getriebe andererseits.

Ferner kann die Flanschfläche der Ölwanne bzw. des Achsträgers mindestens teilweise nicht parallel sein zu einer Flanschfläche zwischen einem Schwungradgehäuse und dem Verbrennungsmotor, insbesondere mit einem stumpfen Winkel zwischen der Flanschfläche der Ölwanne bzw. des Achsträgers einerseits und der Flanschfläche zwischen dem Schwungradgehäuse und dem Verbrennungsmotor andererseits.

Darüber hinaus kann die Flanschfläche der Ölwanne bzw. des Achsträgers mindestens teilweise nicht rechtwinklig sein zu einer Flanschfläche zwischen der Ölwanne und einem Kurbelgehäuse des Verbrennungsmotors, insbesondere mit einer schrägen Neigung zu der Flanschfläche zwischen der Ölwanne und dem Kurbelgehäuse des Verbrennungsmotors.

Schließlich kann die Flanschfläche der Ölwanne bzw. des Achsträgers mindestens teilweise nicht rechtwinklig sein zur Kurbelwellenachse, insbesondere mit einer schrägen Neigung zur Kurbelwellenachse.

Im Zusammenhang mit der in der Beschreibung und den Ansprüchen gemachten Angaben bezogen auf die Fahrzeuglängsrichtung, können diese Angaben zusätzlich oder alternativ zur Fahrzeuglängsrichtung auf die Drehachse der Kurbelwelle und/oder auf die Flanschfläche zwischen Ölwanne und dem Kurbelgehäuse des Verbrennungsmotors bezogen werden. Beispielsweise können die Angaben zu dem Neigungswinkel (α) auch als Winkel zwischen der Flanschfläche der Ölwanne zu dem anderen Bauteil z. B. Achsträger und der Achse der Kurbelwelle und/oder auch als Winkel der Flanschfläche zwischen Ölwanne und Kurbelgehäuse des Verbrennungsmotors verstanden werden.

Zusätzlich zu der vorstehend beschriebenen Ölwanne und dem vorstehend beschriebenen Achsträger beansprucht die Erfindung auch Schutz für ein Kraftfahrzeug (z.B. Schlepper) mit einer solchen Ölwanne und einem entsprechend angepassten Achsträger, die an ihren jeweiligen Flanschflächen mechanisch miteinander verbunden sind, insbesondere durch eine Verschraubung.

Das erfindungsgemäße Kraftfahrzeug (z.B. Schlepper) weist üblicherweise einen Verbrennungsmotor (z.B. Dieselmotor) mit einem Kurbelgehäuse und einer Kurbelwelle, ein Schwungradgehäuse mit einem darin befindlichen Schwungrad und ein Getriebe auf.

Ferner ist zu erwähnen, dass der vorstehend beschriebene Achsträger ausgebildet sein kann zur Lagerung von Pendelachsen (z.B. gefederte oder ungefederte Pendelachsen), Einzelradaufhängungen, Achsschenkellenkungen oder Aufsattellenkern, um nur einige Beispiele zu nennen.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:

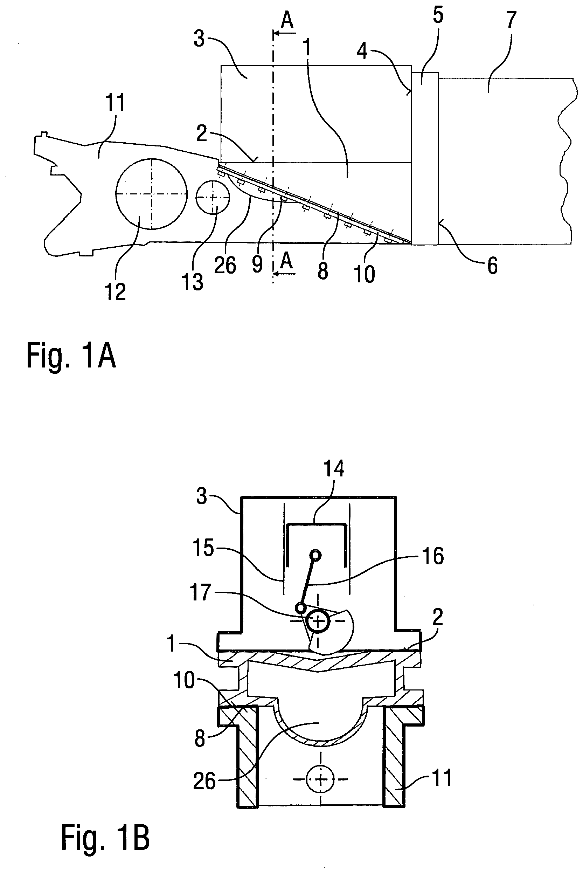

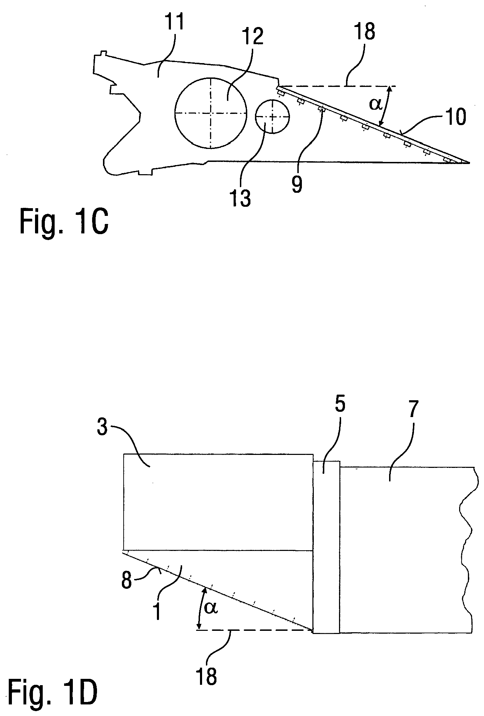

- Figur 1A: eine schematische Seitenansicht einer erfindungsgemäßen Konstruktion mit schräg geneigten Flanschflächen von Ölwanne und Vorderachsträger,
- Figur 1: B eine Querschnittsansicht durch die Konstruktion gemäß Figur 1A entlang der Schnittlinie A-A,
- Figur 1C: eine Seitenansicht des Vorderachsträgers gemäß Figur 1A alleine,
- Figur 1D: eine Seitenansicht des Verbrennungsmotors, der Ölwanne, des Schwungradgehäuses und des Getriebes der Konstruktion gemäß Figur 1A ohne den Vorderachsträger,
- Figur 2: eine Abwandlung der Konstruktion gemäß den Figuren 1A-1D mit einer Ölwanne mit einem dreieckigen Abschnitt und einem rechteckigen Abschnitt,
- Figur 3: eine Seitenansicht einer Abwandlung des Ausführungsbeispiels gemäß den Figuren 1A-1D mit einer im Längsschnitt trapezförmigen Ölwanne,
- Figur 4A: eine Seitenansicht einer Abwandlung des Ausführungsbeispiels gemäß den Figuren 1A-1D,
- Figur 4B: eine schematische Aufsicht auf die Flanschfläche des Achsträgers bei dem Ausführungsbeispiel gemäß Figur 4A,
- Figur 5: eine Seitenansicht einer Abwandlung des Ausführungsbeispiels aus den Figuren 1A-1D,
- Figur 6: eine schematische Darstellung mit Stufen in den Flanschflächen von Ölwanne und Vorderachsträger,
- Figur 7A: eine Perspektivansicht einer erfindungsgemäßen Konstruktion,
- Figur 7B: eine Seitenansicht der Konstruktion aus Figur 7A sowie
- Figur 8: eine schematische Seitenansicht einer herkömmlichen Konstruktion, wie sie eingangs beschrieben wurde.

Die Figuren 1A-1D zeigen eine erfindungsgemäße Konstruktion, die weitgehend mit der eingangs beschriebenen und in Figur 8 dargestellten Konstruktion übereinstimmt, so dass zur Vermeidung von Wiederholungen auf die vorstehende Beschreibung verwiesen wird, wobei für entsprechende Einzelheiten dieselben Bezugszeichen verwendet werden.

In Figur 1B ist zusätzlich dargestellt, dass der Verbrennungsmotor 3 einen Kolben 14, einen Zylinder 15, eine Pleuelstange 16 und eine Kurbelwelle 17 aufweist, was an sich aus dem Stand der Technik bekannt ist und deshalb nicht näher beschrieben werden muss.

Eine Besonderheit der erfindungsgemäßen Konstruktion besteht darin, dass die Flanschfläche 8 der Ölwanne 1 und auch die Flanschfläche 10 des Vorderachsträgers 11 gegenüber der Fahrzeuglängsrichtung 18 um einen Neigungswinkel α nach hinten geneigt ist. Der Neigungswinkel α kann beispielsweise α≈21° sein, jedoch sind auch andere Werte für den Neigungswinkel α möglich. Diese Neigung der Flanschflächen 8, 10 ermöglicht vorteilhaft eine wesentlich größere Fläche der Flanschflächen 8, 10 und damit die Verwendung von größeren Schrauben 9 oder einer größeren Anzahl von Schrauben 9.

Ein weiterer Unterschied der erfindungsgemäßen Konstruktion gegenüber der herkömmlichen Konstruktion besteht darin, dass die Aufnahme 13 für den Lenkzylinder in Fahrzeuglängsrichtung hinter der Aufnahme 12 für die Vorderachse angeordnet ist. Dies ist vorteilhaft, weil der Lenkzylinder dann hinter der Vorderachse geschützt ist und im Betrieb nur einem geringeren Verschleiß ausgesetzt wird. Diese vorteilhafte Anordnung der Aufnahme 13 für den Lenkzylinder ist möglich, indem die Aufnahme 13 für den Lenkzylinder mindestens teilweise unter der Flanschfläche 10 des Vorderachsträgers 11 angeordnet ist.

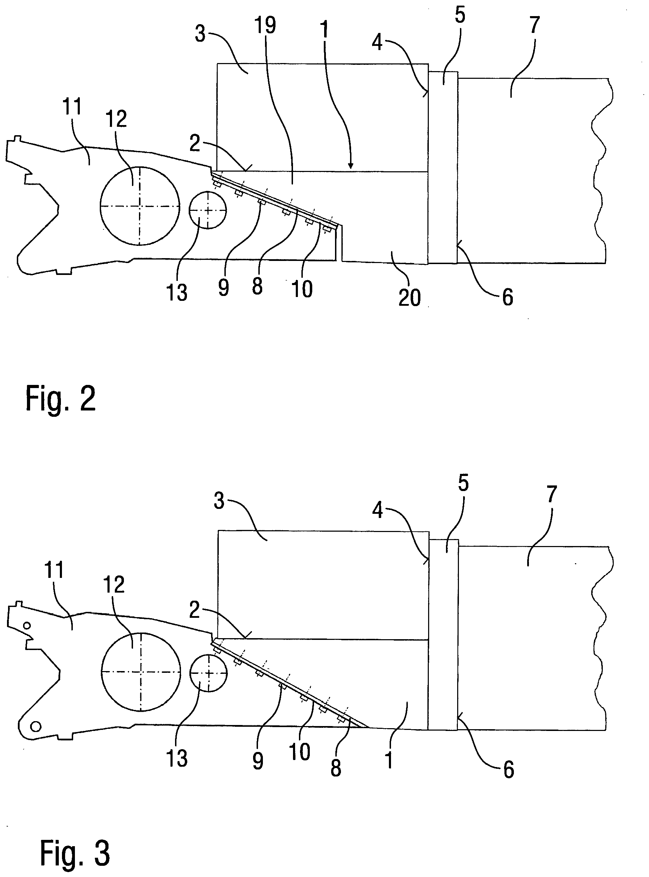

Das Ausführungsbeispiel gemäß Figur 2 stimmt teilweise mit dem vorstehend beschriebenen Ausführungsbeispiel überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Ölwanne 1 einen vorderen dreieckigen Abschnitt 19 und einen hinteren rechteckigen Abschnitt 20 aufweist.

Auch das Ausführungsbeispiel gemäß Figur 3 stimmt teilweise mit dem eingangs beschriebenen Ausführungsbeispiel überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Ölwanne 1 im Längsschnitt entlang der Fahrzeuglängsrichtung 18 trapezförmig ist.

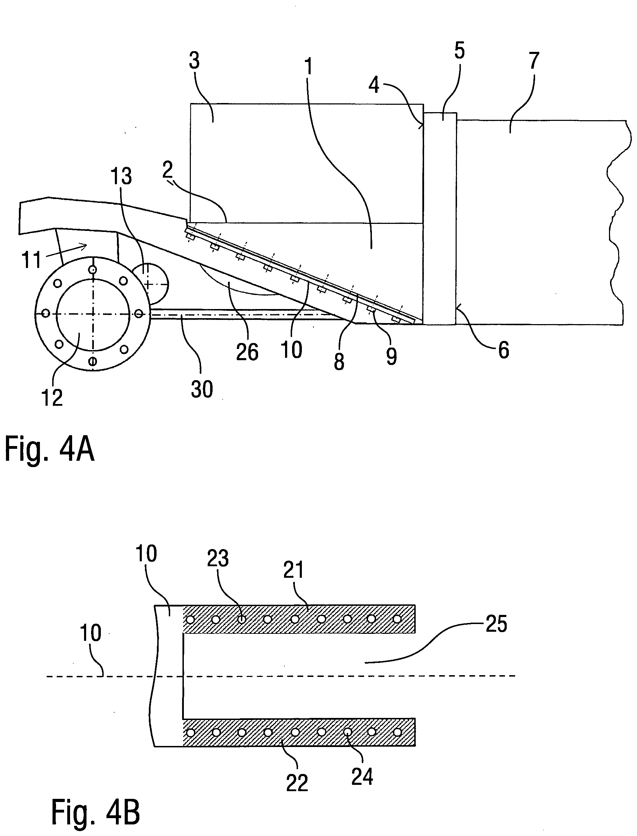

Auch das Ausführungsbeispiel gemäß den Figuren 4A und 4B stimmt weitgehend mit den vorstehend beschriebenen Ausführungsbeispielen überein, wobei für entsprechende Einzelheiten dieselben Bezugszeichen verwendet werden.

In der Aufsicht gemäß Figur 4B ist ersichtlich, dass die Flanschfläche 10 des Vorderachsträgers 11 zwei Befestigungsbereiche 21, 22 aufweist, die in der Zeichnung schraffiert dargestellt sind. Die beiden Befestigungsbereiche 21, 22 sind bezüglich der Fahrzeuglängsrichtung 18 nebeneinander angeordnet und enthalten jeweils zahlreiche Bohrungen 23, 24 zur Aufnahme der Schrauben 9.

Zwischen den beiden seitlichen nebeneinander angeordneten Befestigungsbereichen 21, 22 weist der Vorderachsträger 11 einen Freiraum 25 auf, der es ermöglicht, dass eine bauchige Auswölbung 26 an der Unterseite der Ölwanne 1 über die Flanschfläche 10 hinaus nach unten in den Freiraum 25 herunterragt.

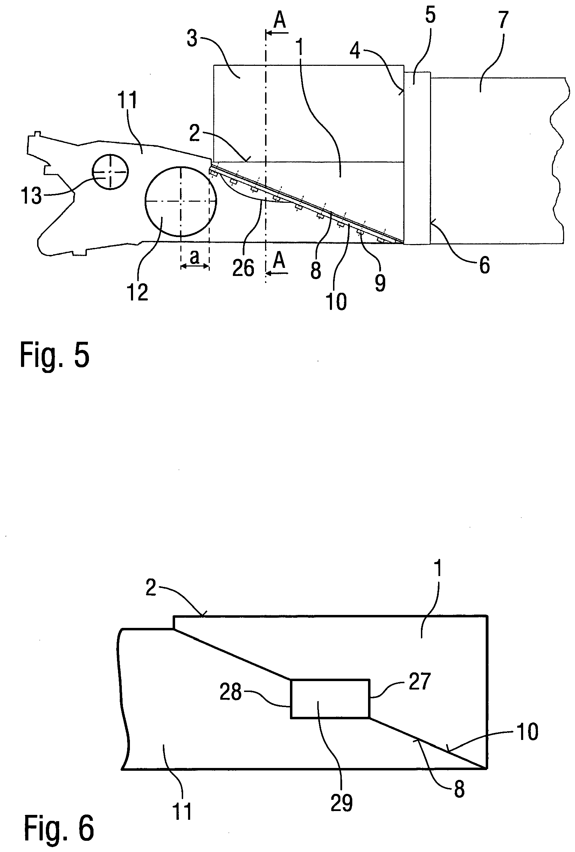

Auch das Ausführungsbeispiel gemäß Figur 5 stimmt teilweise mit dem eingangs beschriebenen Ausführungsbeispiel überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Aufnahme 13 für den Lenkzylinder - wie beim Stand der Technik gemäß Figur 8 - vor der Aufnahme 12 für die Vorderachse angeordnet ist. Die erfindungsgemäße Neigung der Flanschflächen 8, 10 der Ölwanne 1 bzw. des Vorderachsträgers 11 ermöglicht es jedoch, die Vorderachse nach hinten näher an den Verbrennungsmotor 3 heranzurücken, wodurch der Radstand des Schleppers verringert und die Wendigkeit verbessert. So befindet sich die Vorderachse hierbei in einem relativ kleinen Abstand a zu dem vorderen Ende der Flanschflächen 8, 10.

Figur 6 zeigt eine stark vereinfachte schematische Darstellung einer erfindungsgemäßen Weiterbildung, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass in der Flanschfläche 10 des Vorderachsträgers 11 und auch in der Flanschfläche 8 der Ölwanne 1 jeweils eine Stufe 27 bzw. 28 angeordnet ist, wodurch zwischen den beiden Flanschflächen 8, 10 ein Freiraum 29 gebildet wird. In dem Freiraum 29 kann beispielsweise ein modularer Lenkzylinder, ein Flüssigkeitsbehälter, ein Auffahrkeil, ein Ballastkörper oder ein Elektronikbauteil angeordnet werden.

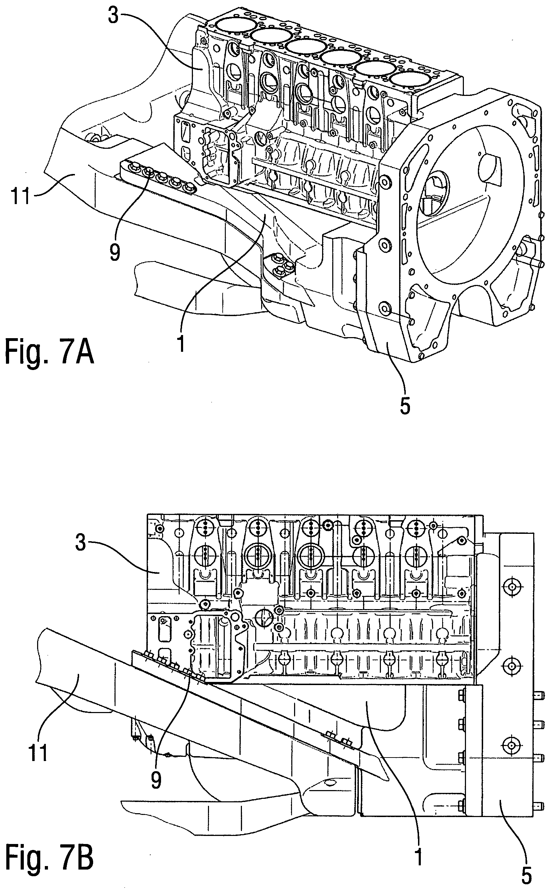

Schließlich zeigen die Figuren 7A bzw. 7B eine Perspektivansicht bzw. eine Seitenansicht einer erfindungsgemäßen Konstruktion mit geneigten Flanschflächen zwischen Ölwanne und Vorderachsträger.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste:

- 1: Ölwanne
- 2: Flanschfläche zwischen Ölwanne und Verbrennungsmotor
- 3: Verbrennungsmotor
- 4: Flanschfläche zwischen Verbrennungsmotor und Schwungradgehäuse
- 5: Schwungradgehäuse
- 6: Flanschfläche zwischen Schwungradgehäuse und Getriebe
- 7: Getriebe
- 8: Flanschfläche der Ölwanne
- 9: Schrauben
- 10: Flanschfläche des Vorderachsträgers
- 11: Vorderachsträger
- 12: Aufnahme für Vorderachse
- 13: Aufnahme für Lenkzylinder
- 14: Kolben
- 15: Zylinder
- 16: Pleuelstange
- 17: Kurbelwelle
- 18: Fahrzeuglängsrichtung
- 19: Vorderer dreieckiger Abschnitt der Ölwanne
- 20: Hinterer rechteckiger Abschnitt der Ölwanne
- 21: Linker Befestigungsbereich der Flanschfläche
- 22: Rechter Befestigungsbereich der Flanschfläche
- 23: Bohrungen in dem linken Befestigungsbereich des Vorderachsträgers
- 24: Bohrungen in dem rechten Befestigungsbereich des Vorderachsträgers
- 25: Freiraum zwischen linkem und rechtem Befestigungsbereich der Flanschfläche
- 26: Bauchige Auswölbung der Ölwanne
- 27: Stufe in der Flanschfläche der Ölwanne
- 28: Stufe in der Flanschfläche des Achsträgers
- 29: Freiraum zwischen Ölwanne und Achsträger
- 30: Antriebswelle
- α: Neigungswinkel der Flanschflächen von Ölwanne und Achsträger
- a: Abstand zwischen Vorderachse und Vorderende der Flanschfläche des Achsträgers

## Patentansprüche

1. Ölwanne (1) für einen Verbrennungsmotor (3), insbesondere für einen Dieselmotor, vorzugsweise eines Fahrzeugs, besonders bevorzugt eines Schleppers, mit
a) einer ersten Flanschfläche (2) zur mechanischen Verbindung der Ölwanne (1) mit einem Kurbelgehäuse des Verbrennungsmotors (3), und
b) einer zweiten Flanschfläche (8) zur mechanischen Verbindung der Ölwanne (1) mit einer entsprechenden Flanschfläche (10) eines Achsträgers (11), insbesondere eines Vorderachsträgers (11), wobei die Ölwanne (1) tragend ist,
**dadurch gekennzeichnet,**
c) **dass** die zweite Flanschfläche (8) mindestens teilweise schräg geneigt ist.

2. Ölwanne (1) nach Anspruch 1, **dadurch gekennzeichnet,**
a) **dass** die zweite Flanschfläche (8) der Ölwanne (1) mindestens teilweise nicht rechtwinklig ist zur Fahrzeuglängsrichtung (18), insbesondere mit einer schrägen Neigung zu der Fahrzeuglängsrichtung (18), und/oder
b) **dass** die zweite Flanschfläche (8) der Ölwanne (1) mindestens teilweise nicht parallel ist zu einer Flanschfläche (6) zwischen einem Schwungradgehäuse (5) und einem Getriebe (7), insbesondere mit einem stumpfen Winkel zwischen der zweiten Flanschfläche (8) der Ölwanne (1) und der Flanschfläche (6) zwischen dem Schwungradgehäuse (5) und dem Getriebe (7), und/oder
c) **dass** die zweite Flanschfläche (8) der Ölwanne (1) mindestens teilweise nicht parallel ist zu einer Flanschfläche (4) zwischen einem Schwungradgehäuse (5) und dem Verbrennungsmotor (3), insbesondere mit einem stumpfen Winkel zwischen der zweiten Flanschfläche (8) der Ölwanne (1) und der Flanschfläche (4) zwischen dem Schwungradgehäuse (5) und dem Verbrennungsmotor (3), und/oder
d) **dass** die zweite Flanschfläche (8) der Ölwanne (1) mindestens teilweise nicht rechtwinklig ist zu der ersten Flanschfläche (2) zwischen der Ölwanne (1) und dem Kurbelgehäuse des Verbrennungsmotors (3), insbesondere mit einer schrägen Neigung zu der ersten Flanschfläche (2) zwischen der Ölwanne (1) und dem Kurbelgehäuse des Verbrennungsmotors (3), und/oder
e) **dass** die zweite Flanschfläche (8) der Ölwanne (1) mindestens teilweise nicht rechtwinkelig ist zur Achse einer Kurbelwelle (17), insbesondere mit einer schrägen Neigung zu der Achse der Kurbelwelle (17).

3. Ölwanne (1) nach einem der vorhergehenden Ansprüche, **dadurch gekennzeichnet,**
a) **dass** die Ölwanne (1) im Längsschnitt entlang der Fahrzeuglängsrichtung (18) im Wesentlichen dreieckig ist, oder
b) **dass** die Ölwanne (1) im Längsschnitt entlang der Fahrzeuglängsrichtung (18) im Wesentlichen trapezförmig ist.

4. Ölwanne (1) nach Anspruch 1 oder 2, **dadurch gekennzeichnet,**
a) **dass** die Ölwanne (1) im Längsschnitt entlang der Fahrzeuglängsrichtung (18) einen im Wesentlichen dreieckigen Abschnitt (19) und einen im Wesentlichen rechteckigen Abschnitt (20) aufweist, wobei die beiden Abschnitte (19, 20) der Ölwanne (1) in der Fahrzeuglängsrichtung (18) hintereinander angeordnet sind, und
b) **dass** die zweite Flanschfläche (8) der Ölwanne (1) an der Unterseite des dreieckigen Abschnitts (19) angeordnet ist.

5. Ölwanne (1) nach einem der vorhergehenden Ansprüche, **dadurch gekennzeichnet,**
a) **dass** die zweite Flanschfläche (8) der Ölwanne (1) zwei Befestigungsbereiche (21, 22) aufweist,
b) **dass** die beiden Befestigungsbereiche (21, 22) der zweiten Flanschfläche (8) der Ölwanne (1) bezüglich der Fahrzeuglängsrichtung (18) seitlich nebeneinander angeordnet und zueinander beabstandet sind, und
c) **dass** die Ölwanne (1) zwischen den beiden Befestigungsbereichen (21, 22) der zweiten Flanschfläche (8) der Ölwanne (1) nach unten ragt, insbesondere in Form einer bauchigen Auswölbung (26) in der Fahrzeugmitte.

6. Ölwanne (1) nach einem der vorhergehenden Ansprüche, **dadurch gekennzeichnet,**
a) **dass** die zweite Flanschfläche (8) der Ölwanne (1) zu der Fahrzeuglängsrichtung (18) um einen Neigungswinkel (a) von mehr als 5°, 10°, 15° oder 20° und/oder weniger als 80°, 60°, 50°, 40°, 35°, 30° oder 25° geneigt ist, und/oder
b) **dass** die zweite Flanschfläche (8) der Ölwanne (1) gegenüber der Fahrzeuglängsrichtung (18) nach hinten geneigt ist, und/oder
c) **dass** sich die zweite Flanschfläche (8) der Ölwanne (1) in der Fahrzeuglängsrichtung (18) im Wesentlichen über die gesamte Länge der Ölwanne (1) erstreckt, und/oder
d) **dass** sich die zweite Flanschfläche (8) der Ölwanne (1) von der Oberseite der Ölwanne (1) bis zur Unterseite der Ölwanne (1) erstreckt.

7. Ölwanne (1) nach einem der vorhergehenden Ansprüche, **dadurch gekennzeichnet,**
a) **dass** die zweite Flanschfläche (8) der Ölwanne (1) eine Stufe (27) entlang der Fahrzeuglängsrichtung (18) aufweist, und
b) **dass** die Stufe (27) einen Freiraum (29) zwischen der Ölwanne (1) und dem anderen Bauteil (11), insbesondere dem Achsträger (11), bildet, insbesondere zur Aufnahme
b1) eines Lenkzylinders,
b2) eines Flüssigkeitsbehälters,
b3) eines Auffahrkeils,
b4) eines Ballastkörpers oder
b5) eines Elektronikbauteils.

8. Kraftfahrzeug, insbesondere Schlepper, mit
a) einem Verbrennungsmotor (3) mit einem Kurbelgehäuse,
b) einer Ölwanne (1) nach einem der vorhergehenden Ansprüche, wobei die Ölwanne (1) mit der ersten Flanschfläche (2) mechanisch mit dem Kurbelgehäuse des Verbrennungsmotors (3) verbunden, und
c) einem Achsträger (11), insbesondere einem Vorderachsträger, mit einer schräg geneigten Flanschfläche (10), wobei die Ölwanne (1) mit ihrer zweiten Flanschfläche (8) mechanisch mit der Flanschfläche (10) des Achsträgers (11) verbunden ist.

9. Kraftfahrzeug nach Anspruch 8, **dadurch gekennzeichnet,**
a) **dass** die Flanschfläche (10) des Achsträgers (11) mindestens teilweise nicht rechtwinklig ist zur Fahrzeuglängsrichtung (18), insbesondere mit einer schrägen Neigung zu der Fahrzeuglängsrichtung (18), und/oder
b) **dass** die Flanschfläche (10) des Achsträgers (11) mindestens teilweise nicht parallel ist zu einer Flanschfläche (6) zwischen einem Schwungradgehäuse (5) und einem Getriebe (7), insbesondere mit einem stumpfen Winkel zwischen der Flanschfläche (10) des Achsträgers (11) und der Flanschfläche (6) zwischen dem Schwungradgehäuse (5) und dem Getriebe (7), und/oder
c) **dass** die Flanschfläche (10) des Achsträgers (11) mindestens teilweise nicht parallel ist zu einer Flanschfläche (4) zwischen einem Schwungradgehäuse (5) und dem Verbrennungsmotor (3), insbesondere mit einem stumpfen Winkel zwischen der Flanschfläche (10) des Achsträgers (11) und der Flanschfläche (4) zwischen dem Schwungradgehäuse (5) und dem Verbrennungsmotor (3), und/oder
d) **dass** die Flanschfläche (10) des Achsträgers (11) mindestens teilweise nicht rechtwinklig ist zu der ersten Flanschfläche (2) zwischen der Ölwanne (1) und einem Kurbelgehäuse des Verbrennungsmotors (3), insbesondere mit einer schrägen Neigung zu der ersten Flanschfläche (2) zwischen der Ölwanne (1) und dem Kurbelgehäuse des Verbrennungsmotors (3), und/oder
e) **dass** die Flanschfläche (10) des Achsträgers (11) mindestens teilweise nicht rechtwinkelig ist zur Achse einer Kurbelwelle (17), insbesondere mit einer schrägen Neigung zu der Achse der Kurbelwelle (17).

10. Kraftfahrzeug nach Anspruch 8 oder 9, **dadurch gekennzeichnet,**
a) **dass** die Flanschfläche (10) des Achsträgers (11) mindestens einen Befestigungsbereich (21, 22) und vorzugsweise zwei nebeneinander liegende Befestigungsbereiche (21, 22) aufweist, wobei der Achsträger (11) in der Aufsicht vorzugsweise U-förmig, V-förmig oder ringförmig geschlossen, verrippt oder mit Quertraversen verbunden ist,
b) **dass** zwischen den Befestigungsbereichen (21, 22) der Flanschfläche (10) des Achsträgers (11) ein Freiraum (25) liegt, und
c) **dass** die Ölwanne (1) nach unten in den Freiraum (25) zwischen den Befestigungsbereichen (21, 22) der Flanschfläche (10) des Achsträgers (11) hineinragt, insbesondere in Form einer bauchigen Auswölbung (26) an der Unterseite der Ölwanne (1) in der Fahrzeugmitte.

11. Kraftfahrzeug nach einem der Ansprüche 8 bis 10, **dadurch gekennzeichnet,**
a) **dass** die Flanschfläche (10) des Achsträgers (11) um einen Neigungswinkel (a) von mehr als 5°, 10°, 15° oder 20° und/oder weniger als 80°, 60°, 50°, 40°, 35°, 30° oder 25° geneigt ist, und/oder
b) **dass** die Flanschfläche (10) des Achsträgers (11) gegenüber der Fahrzeuglängsrichtung (18) nach hinten geneigt ist, und/oder
c) **dass** die Flanschfläche (10) des Achsträgers (11) wesentlich größer ist als die Querschnittsfläche des Achsträgers (11) rechtwinklig zur Fahrzeuglängsrichtung (18) an der Vorderseite der Ölwanne (1), insbesondere mindestens zweimal so groß.

12. Kraftfahrzeug nach einem der Ansprüche 8 bis 11, **dadurch gekennzeichnet,**
a) **dass** die Flanschfläche (10) des Achsträgers (11) eine Stufe (28) in der Fahrzeuglängsrichtung (18) aufweist, und
b) **dass** die Stufe (28) einen Freiraum (29) zwischen der Ölwanne (1) und dem Achsträger (11) bildet, insbesondere zur Aufnahme
b1) eines Lenkzylinders,
b2) eines Flüssigkeitsbehälters,
b3) eines Auffahrkeils,
b4) eines Ballastkörpers oder
b5) eines Elektronikbauteils.

13. Kraftfahrzeug nach einem der Ansprüche 8 bis 12, **gekennzeichnet durch**
a) eine Aufnahme (13) für einen Lenkzylinder zum mechanischen Antrieb einer Fahrzeuglenkung und
b) eine Aufnahme (12) für eine Vorderachse.

14. Kraftfahrzeug nach Anspruch 13, **dadurch gekennzeichnet,**
a) **dass** die Aufnahme (13) für den Lenkzylinder in der Fahrzeuglängsrichtung (18) hinter der Aufnahme (12) für die Vorderachse angeordnet ist, und/oder
b) **dass** die Aufnahme (13) für den Lenkzylinder in der Fahrzeuglängsrichtung (18) mindestens teilweise zwischen der Aufnahme (12) für die Vorderachse und der Ölwanne (1) angeordnet ist, und/oder
c) **dass** der Lenkzylinder mindestens teilweise unter der Ölwanne (1) angeordnet ist, und/oder
d) **dass** der Lenkzylinder mindestens teilweise in einem Freiraum der Ölwanne (1) verläuft.

15. Kraftfahrzeug nach einem der Ansprüche 8 bis 14, **dadurch gekennzeichnet,**
a) **dass** der Achsträger (11) eine Aufnahme (12) für eine Vorderachse aufweist, und
b) **dass** sich die Aufnahme (12) für die Vorderachse teilweise unterhalb der Flanschfläche (10) des Achsträgers (11) befindet, um einen kurzen Radstand zu erreichen, oder
c) **dass** die Vorderachse zur Erreichung eines kurzen Radstands in einem geringen Abstand (a) zu dem vorderen Ende der Flanschfläche (10) des Achsträgers (11) angeordnet ist, wobei der Abstand (a) in der Fahrzeuglängsrichtung (18) kleiner ist als
c1) 80cm, 50cm, 40cm, 30cm oder 20cm, oder
c2) 80%, 50%, 30% oder 20% der Länge der Flanschfläche (10) des Achsträgers (11) in der Fahrzeuglängsrichtung (18).

## Claims

1. Oil pan (1) for an internal combustion engine (3), in particular for a diesel engine, preferably of a vehicle, particularly preferably of a tractor, with
a) a first flange face (2) for the mechanical connection of the oil pan (1) to a crankcase of the internal combustion engine (3), and
b) a second flange face (8) for the mechanical connection of the oil pan (1) to a corresponding flange face (10) of an axle carrier (11), in particular of a front axle carrier (11), the oil pan (1) being load-bearing,
**characterized**
c) **in that** the second flange face (8) is inclined obliquely at least partially.

2. Oil pan (1) according to Claim 1, **characterized**
a) **in that** the second flange face (8) of the oil pan (1) is at least partially not at a right angle with respect to the vehicle longitudinal direction (18), in particular with an oblique inclination with respect to the vehicle longitudinal direction (18), and/or
b) **in that** the second flange face (8) of the oil pan (1) is at least partially not parallel to a flange face (6) between a flywheel housing (5) and a transmission (7), in particular with an obtuse angle between the second flange face (8) of the oil pan (1) and the flange face (6) between the flywheel housing (5) and the transmission (7), and/or
c) **in that** the second flange face (8) of the oil pan (1) is at least partially not parallel to a flange face (4) between a flywheel housing (5) and the internal combustion engine (3), in particular with an obtuse angle between the second flange face (8) of the oil pan (1) and the flange face (4) between the flywheel housing (5) and the internal combustion engine (3), and/or
d) **in that** the second flange face (8) of the oil pan (1) is at least partially not at a right angle with respect to the first flange face (2) between the oil pan (1) and the crankcase of the internal combustion engine (3), in particular with an oblique inclination with respect to the first flange face (2) between the oil pan (1) and the crankcase of the internal combustion engine (3), and/or
e) **in that** the second flange face (8) of the oil pan (1) is at least partially not at a right angle with respect to the axis of a crankshaft (17), in particular with an oblique inclination with respect to the axis of the crankshaft (17).

3. Oil pan (1) according to either of the preceding claims, **characterized**
a) **in that** the oil pan (1) is substantially triangular in longitudinal section along the vehicle longitudinal direction (18), or
b) **in that** the oil pan (1) is substantially trapezoidal in longitudinal section along the vehicle longitudinal direction (18).

4. Oil pan (1) according to Claim 1 or 2, **characterized**
a) **in that** the oil pan (1) has a substantially triangular section (19) and a substantially rectangular section (20) in longitudinal section along the vehicle longitudinal direction (18), the two sections (19, 20) of the oil pan (1) being arranged behind one another in the vehicle longitudinal direction (18), and
b) **in that** the second flange face (8) of the oil pan (1) is arranged on the underside of the triangular section (19).

5. Oil pan (1) according to one of the preceding claims, **characterized**
a) **in that** the second flange face (8) of the oil pan (1) has two fastening regions (21, 22),
b) **in that** the two fastening regions (21, 22) of the second flange face (8) of the oil pan (1) are spaced apart from one another and arranged laterally next to one another with regard to the vehicle longitudinal direction (18), and
c) **in that** the oil pan (1) protrudes downwards between the two fastening regions (21, 22) of the second flange face (8) of the oil pan (1), in particular in the form of a bulbous protuberance (26) in the vehicle centre.

6. Oil pan (1) according to one of the preceding claims, **characterized**
a) **in that** the second flange face (8) of the oil pan (1) is inclined with respect to the vehicle longitudinal direction (18) by an inclination angle (α) of more than 5°, 10°, 15° or 20° and/or less than 80°, 60°, 50°, 40°, 35°, 30° or 25°, and/or
b) **in that** the second flange face (8) of the oil pan (1) is inclined towards the rear with respect to the vehicle longitudinal direction (18), and/or
c) **in that** the second flange face (8) of the oil pan (1) extends substantially over the entire length of the oil pan (1) in the vehicle longitudinal direction (18), and/or
d) **in that** the second flange face (8) of the oil pan (1) extends from the upper side of the oil pan (1) as far as the underside of the oil pan (1).

7. Oil pan (1) according to one of the preceding claims, **characterized**
a) **in that** the second flange face (8) of the oil pan (1) has a step (27) along the vehicle longitudinal direction (18), and
b) **in that** the step (27) forms a clearance (29) between the oil pan (1) and the other component (11), in particular the axle carrier (11), in particular in order to receive
b1) a steering cylinder,
b2) a liquid container,
b3) a run-on wedge,
b4) a ballast body, or
b5) an electronic component.

8. Motor vehicle, in particular tractor, with
a) an internal combustion engine (3) with a crankcase,
b) an oil pan (1) according to one of the preceding claims, the oil pan (1) being connected mechanically by way of the first flange face (2) to the crankcase of the internal combustion engine (3), and
c) an axle carrier (11), in particular a front axle carrier, with an obliquely inclined flange face (10), the oil pan (1) being connected mechanically by way of its second flange face (8) to the flange face (10) of the axle carrier (11).

9. Motor vehicle according to Claim 8, **characterized**
a) **in that** the flange face (10) of the axle carrier (11) is at least partially not at a right angle with respect to the vehicle longitudinal direction (18), in particular with an oblique inclination with respect to the vehicle longitudinal direction (18), and/or
b) **in that** the flange face (10) of the axle carrier (11) is at least partially not parallel to a flange face (6) between a flywheel housing (5) and a transmission (7), in particular with an obtuse angle between the flange face (10) of the axle carrier (11) and the flange face (6) between the flywheel housing (5) and the transmission (7), and/or
c) **in that** the flange face (10) of the axle carrier (11) is at least partially not parallel to a flange face (4) between a flywheel housing (5) and the internal combustion engine (3), in particular with an obtuse angle between the flange face (10) of the axle carrier (11) and the flange face (4) between the flywheel housing (5) and the internal combustion engine (3), and/or
d) **in that** the flange face (10) of the axle carrier (11) is at least partially not at a right angle with respect to the first flange face (2) between the oil pan (1) and a crankcase of the internal combustion engine (3), in particular with an oblique inclination with respect to the first flange face (2) between the oil pan (1) and the crankcase of the internal combustion engine (3), and/or
e) **in that** the flange face (10) of the axle carrier (11) is at least partially not at a right angle with respect to the axis of the crankshaft (17), in particular with an oblique inclination with respect to the axis of the crankshaft (17).

10. Motor vehicle according to Claim 8 or 9, **characterized**
a) **in that** the flange face (10) of the axle carrier (11) has at least one fastening region (21, 22) and preferably two fastening regions (21, 22) which lie next to one another, the axle carrier (11) preferably being, in plan view, closed in a U-shaped, V-shaped or annular manner, ribbed or connected to crossmembers,
b) **in that** a clearance (25) lies between the fastening regions (21, 22) of the flange face (10) of the axle carrier (11), and
c) **in that** the oil pan (1) protrudes downwards into the clearance (25) between the fastening regions (21, 22) of the flange face (10) of the axle carrier (11), in particular in the form of a bulbous protuberance (26) on the underside of the oil pan (1) in the vehicle centre.

11. Motor vehicle according to one of Claims 8 to 10, **characterized**
a) **in that** the flange face (10) of the axle carrier (11) is inclined by an inclination angle (α) of more than 5°, 10°, 15° or 20° and/or less than 80°, 60°, 50°, 40°, 35°, 30° or 25°, and/or
b) **in that** the flange face (10) of the axle carrier (11) is inclined towards the rear with respect to the vehicle longitudinal direction (18), and/or
c) **in that** the flange face (10) of the axle carrier (11) is substantially greater than the cross-sectional area of the axle carrier (11) at a right angle with respect to the vehicle longitudinal direction (18) on the front side of the oil pan (1), in particular at least twice as great.

12. Motor vehicle according to one of Claims 8 to 11, **characterized**
a) **in that** the flange face (10) of the axle carrier (11) has a step (28) in the vehicle longitudinal direction (18), and
b) **in that** the step (28) forms a clearance (29) between the oil pan (1) and the axle carrier (11), in particular for receiving
b1) a steering cylinder,
b2) a liquid container,
b3) a run-on wedge,
b4) a ballast body, or
b5) an electronic component.

13. Motor vehicle according to one of Claims 8 to 12, **characterized by**
a) a seat (13) for a steering cylinder for the mechanical drive of a vehicle steering system, and
b) a seat (12) for a front axle.

14. Motor vehicle according to Claim 13, **characterized**
a) **in that** the seat (13) for the steering cylinder is arranged behind the seat (12) for the front axle in the vehicle longitudinal direction (18), and/or
b) **in that** the seat (13) for the steering cylinder is arranged at least partially between the seat (12) for the front axle and the oil pan (1) in the vehicle longitudinal direction (18), and/or
c) **in that** the steering cylinder is arranged at least partially below the oil pan (1), and/or
d) **in that** the steering cylinder runs at least partially in a clearance of the oil pan (1).

15. Motor vehicle according to one of Claims 8 to 14, **characterized**
a) **in that** the axle carrier (11) has a seat (12) for a front axle, and
b) **in that** the seat (12) for the front axle is situated partially below the flange face (10) of the axle carrier (11), in order to achieve a short wheelbase, or
c) **in that**, in order to achieve a short wheelbase, the front axle is arranged at a small spacing (a) from the front end of the flange face (10) of the axle carrier (11), the spacing (a) in the vehicle longitudinal direction (18) being smaller than
c1) 80 cm, 50 cm, 40 cm, 30 cm or 20 cm, or
c2) 80%, 50%, 30% or 20% of the length of the flange face (10) of the axle carrier (11) in the vehicle longitudinal direction (18).

## Revendications

1. Carter d'huile (1) destiné à un moteur à combustion interne (3), en particulier à un moteur diesel, de préférence d'un véhicule, de manière particulièrement préférée d'un tracteur, ledit carter d'huile comprenant
a) une première surface de bride (2) destinée à relier mécaniquement le carter d'huile (1) à un boîtier de vilebrequin du moteur à combustion interne (3), et
b) une deuxième surface de bride (8) destinée à relier mécaniquement le carter d'huile (1) à une surface de bride correspondante (10) d'un support d'essieu (11), en particulier d'un support d'essieu avant (11), le carter d'huile (1) étant porteur,
**caractérisé en ce que**
c) la deuxième surface de bride (8) est au moins partiellement inclinée obliquement.

2. Carter d'huile (1) selon la revendication 1, **caractérisé en ce que**
a) la deuxième surface de bride (8) du carter d'huile (1) est au moins partiellement non perpendiculaire à la direction longitudinale (18) du véhicule, en particulier elle présente une inclinaison oblique par rapport à la direction longitudinale (18) du véhicule, et/ou
b) la deuxième surface de bride (8) du carter d'huile (1) est au moins partiellement non parallèle à une surface de bride (6) située entre un boîtier de volant (5) et une transmission (7), en particulier elle présente un angle obtus entre la deuxième surface de bride (8) du carter d'huile (1) et la surface de bride (6) située entre le boîtier de volant (5) et la transmission (7), et/ou
c) la deuxième surface de bride (8) du carter d'huile (1) est au moins partiellement non parallèle à une surface de bride (4) située entre un boîtier de volant (5) et le moteur à combustion interne (3), en particulier elle présente un angle obtus entre la deuxième surface de bride (8) du carter d'huile (1) et la surface de bride (4) située entre le boîtier de volant (5) et le moteur à combustion interne (3), et/ou
d) la deuxième surface de bride (8) du carter d'huile (1) est au moins partiellement non perpendiculaire à la première surface de bride (2) située entre le carter d'huile (1) et le boîtier de vilebrequin du moteur à combustion interne (3), en particulier elle présente une inclinaison oblique par rapport à la première surface de bride (2) située entre le carter d'huile (1) et le boîtier de vilebrequin du moteur à combustion interne (3), et/ou
e) la deuxième surface de bride (8) du carter d'huile (1) est au moins partiellement non perpendiculaire à l'axe d'un vilebrequin (17), en particulier elle présente une inclinaison oblique par rapport à l'axe du vilebrequin (17).

3. Carter d'huile (1) selon l'une des revendications précédentes, **caractérisé en ce que**
a) le carter d'huile (1) est sensiblement triangulaire dans une vue en coupe longitudinale le long de la direction longitudinale (18) du véhicule, ou
b) le carter d'huile (1) est sensiblement trapézoïdal dans une vue en coupe longitudinale le long de la direction longitudinale (18) du véhicule.

4. Carter d'huile (1) selon la revendication 1 ou 2, **caractérisé en ce que**
a) le carter d'huile (1) comporte une portion sensiblement triangulaire (19) et une portion sensiblement rectangulaire (20) dans la vue en coupe longitudinale le long de la direction longitudinale (18) du véhicule, les deux portions (19, 20) du carter d'huile (1) étant disposées l'une derrière l'autre dans la direction longitudinale (18) du véhicule, et
b) la deuxième surface de bride (8) du carter d'huile (1) est disposée du côté inférieur de la portion triangulaire (19).

5. Carter d'huile (1) selon l'une des revendications précédentes, **caractérisé en ce que**
a) la deuxième surface de bride (8) du carter d'huile (1) comporte deux zones de fixation (21, 22),
b) les deux zones de fixation (21, 22) de la deuxième surface de bride (8) du carter d'huile (1) sont disposées latéralement l'une à côté de l'autre par rapport à la direction longitudinale (18) du véhicule et sont espacées l'une de l'autre, et
c) le carter d'huile (1) fait saillie vers le bas entre les deux zones de fixation (21, 22) de la deuxième surface de bride (8) du carter d'huile (1), notamment sous la forme d'un renflement bulbeux (26) au milieu du véhicule.

6. Carter d'huile (1) selon l'une des revendications précédentes, **caractérisé en ce que**
a) la deuxième surface de bride (8) du carter d'huile (1) est inclinée d'un angle d'inclinaison (α) supérieur à 5°, 10°, 15° ou 20° et/ou inférieur à 80°, 60°, 50°, 40°, 35°, 30° ou 25° par rapport à la direction longitudinale (18) du véhicule, et/ou
b) la deuxième surface de bride (8) du carter d'huile (1) est inclinée vers l'arrière par rapport à la direction longitudinale (18) du véhicule, et/ou
c) la deuxième surface de bride (8) du carter d'huile (1) s'étend sensiblement sur toute la longueur du carter d'huile (1) dans la direction longitudinale (18) du véhicule, et/ou
d) la deuxième surface de bride (8) du carter d'huile (1) s'étend du côté supérieur du carter d'huile (1) jusqu'au côté inférieur du carter d'huile (1).

7. Carter d'huile (1) selon l'une des revendications précédentes, **caractérisé en ce que**
a) la deuxième surface de bride (8) du carter d'huile (1) comporte un gradin (27) le long de la direction longitudinale (18) du véhicule, et
b) le gradin (27) forme un espace libre (29) entre le carter d'huile (1) et l'autre composant (11), en particulier le support d'essieu (11), notamment pour recevoir
b1) un vérin de direction,
b2) un réservoir de liquide,
b3) une cale d'accès,
b4) un corps de ballast, ou
b5) un composant électronique.

8. Véhicule automobile, en particulier tracteur, comprenant
a) un moteur à combustion interne (3) pourvu d'un boîtier de vilebrequin,
b) un carter d'huile (1) selon l'une des revendications précédentes, le carter d'huile (1) étant relié mécaniquement avec la première surface de bride (2) au boîtier de vilebrequin du moteur à combustion interne (3), et
c) un support d'essieu (11), en particulier un support d'essieu avant, pourvu d'une surface de bride (10) inclinée obliquement, le carter d'huile (1) étant relié mécaniquement avec sa deuxième surface de bride (8) à la surface de bride (10) du support d'essieu (11) .

9. Véhicule automobile selon la revendication 8, **caractérisé en ce que**
a) la surface de bride (10) du support d'essieu (11) est au moins partiellement non perpendiculaire à la direction longitudinale (18) du véhicule, en particulier elle présente une inclinaison oblique par rapport à la direction longitudinale (18) du véhicule, et/ou
b) la surface de bride (10) du support d'essieu (11) est au moins partiellement non parallèle à une surface de bride (6) située entre un boîtier de volant (5) et une transmission (7), en particulier elle présente un angle obtus entre la surface de bride (10) du support d'essieu (11) et la surface de bride (6) située entre le boîtier de volant (5) et la transmission (7), et/ou
c) la surface de bride (10) du support d'essieu (11) est au moins partiellement non parallèle à une surface de bride (4) située entre un boîtier de volant (5) et le moteur à combustion interne (3), en particulier elle présente un angle obtus entre la surface de bride (10) du support d'essieu (11) et la surface de bride (4) située entre le boîtier de volant (5) et le moteur à combustion interne (3), et/ou
d) la surface de bride (10) du support d'essieu (11) est au moins partiellement non perpendiculaire à la première surface de bride (2) située entre le carter d'huile (1) et un boîtier de vilebrequin du moteur à combustion interne (3), en particulier elle présente une inclinaison oblique par rapport à la première surface de bride (2) entre le carter d'huile (1) et le boîtier de vilebrequin du moteur à combustion interne (3), et/ou
e) la surface de bride (10) du support d'essieu (11) est au moins partiellement non perpendiculaire à l'axe d'un vilebrequin (17), en particulier elle présente une inclinaison oblique par rapport à l'axe du vilebrequin (17) .

10. Véhicule automobile selon la revendication 8 ou 9, **caractérisé en ce que**
a) la surface de bride (10) du support d'essieu (11) comporte au moins une zone de fixation (21, 22) et de préférence deux zones de fixation adjacentes (21, 22), le support d'essieu (11) étant de préférence en forme de U, de V ou étant fermé en anneau, nervuré ou relié à des traverses,
b) un espace libre (25) est ménagé entre les zones de fixation (21, 22) de la surface de bride (10) du support d'essieu (11), et
c) le carter d'huile (1) fait saillie vers le bas dans l'espace libre (25) ménagé entre les zones de fixation (21, 22) de la surface de bride (10) du support d'essieu (11), en particulier sous la forme d'un renflement bulbeux (26) du côté inférieur du carter d'huile (1) au milieu du véhicule.

11. Véhicule automobile selon l'une des revendications 8 à 10, **caractérisé en ce que**
a) la surface de bride (10) du support d'essieu (11) est inclinée d'un angle d'inclinaison (α) supérieur à 5°, 10°, 15° ou 20° et/ou inférieur à 80°, 60°, 50°, 40°, 35°, 30° ou 25°, et/ou
b) la surface de bride (10) du support d'essieu (11) est inclinée vers l'arrière par rapport à la direction longitudinale (18) du véhicule, et/ou
c) la surface de bride (10) du support d'essieu (11) est sensiblement plus grande, en particulier au moins deux fois plus grande, que la surface en coupe transversale du support d'essieu (11) perpendiculairement à la direction longitudinale (18) du véhicule du côté avant du carter d'huile (1).

12. Véhicule automobile selon l'une des revendications 8 à 11, **caractérisé en ce que**
a) la surface de bride (10) du support d'essieu (11) comporte un gradin (28) dans la direction longitudinale (18) du véhicule, et
b) le gradin (28) forme un espace libre (29) entre le carter d'huile (1) et le support d'essieu (11), notamment pour recevoir
b1) un vérin de direction,
b2) un réservoir de liquide,
b3) une cale d'accès,
b4) un corps de ballast, ou
b5) un composant électronique.

13. Véhicule automobile selon l'une des revendications 8 à 12, **caractérisé par**
a) un logement (13) destiné à un vérin de direction pour entraîner mécaniquement un système de direction de véhicule et
b) un logement (12) destiné à un essieu avant.

14. Véhicule automobile selon la revendication 13, **caractérisé en ce que**
a) le logement (13) destiné au vérin de direction est disposé derrière le logement (12) destiné à l'essieu avant dans la direction longitudinale (18) du véhicule, et/ou
b) le logement (13) destiné au vérin de direction est disposé au moins partiellement entre le logement (12) destiné à l'essieu avant et le carter d'huile (1) dans la direction longitudinale (18) du véhicule, et/ou
c) le vérin de direction est disposé au moins partiellement sous le carter d'huile (1), et/ou
d) le vérin de direction s'étend au moins partiellement dans un espace libre du carter d'huile (1) .

15. Véhicule automobile selon l'une des revendications 8 à 14, **caractérisé en ce que**
a) le support d'essieu (11) comporte un logement (12) destiné à un essieu avant, et
b) le logement (12) destiné à l'essieu avant est situé partiellement au-dessous de la surface de bride (10) du support d'essieu (11) afin d'obtenir un empattement court, ou
c) l'essieu avant est disposé à une courte distance (a) de l'extrémité avant de la surface de bride (10) du support d'essieu (11) pour obtenir un empattement court, la distance (a) dans la direction longitudinale (18) du véhicule étant inférieure à
c1) 80 cm, 50 cm, 40 cm, 30 cm ou 20 cm, ou
c2) 80 %, 50 %, 30 % ou 20 % de la longueur de la surface de bride (10) du support d'essieu (11) dans la direction longitudinale (18) du véhicule.
